# EUROPEAN PATENT SPECIFICATION

(11) **EP 2 881 211 B1**
(45) Date of publication and mention of the grant of the patent: **08.02.2017**
(21) Application number: 13005655.9
(22) Date of filing: 05.12.2013
(51) Int. Cl.: B23K 25/00, B23K 35/362, B23K 35/365, B23K 35/368

(54) **Method of depositing an overlay material onto a metal surface by means of electroslag strip cladding, with flux having more than 55 wt% CaF2 ; corresponding flux and article with such overlay**
Verfahren zum Aufbringen eines Überlagerungsmaterials auf eine Metalloberfläche mittels Elektroschlackenstreifenverkleidung, mit einem mehr als 55 wt% CaF2 behaltenden Flux ; entsprechenden Flux und Artikel mit solchem Überlagerungsmaterial
Procédé de dépôt d'un matériau de recouvrement sur une surface métallique au moyen de placage de feuillard sous laitier électroconducteur, avec un flux comprenant plus de 55 % en poids de CaF2 ; Flux correspondant et article avec un tel matériau de recouvrement

(43) Date of publication of application: 10.06.2015
(73) Proprietor: voestalpine Böhler Welding Belgium S.A., 7180 Seneffe (BE)
(72) Inventor: YILDIRIM Hasan, B-7100 Saint-Vaast (BE); DECHERF Mathieu, B-7332 Sirault (BE)
(74) Representative: Keschmann, Marc

(56) References cited:
- EP-A1- 2 656 963
- WO-A2-96/05935
- JP-A- H11 291 086
- JP-A- S58 154 494
- US-A- 5 308 407

## Description

The invention refers to a method of depositing an overlay material onto a metal surface by means of electroslag strip cladding and an article according to the preamble of claims 1 and 20 (see for example, WO96/05935 A), and to a flux material according to the preamble of claim 14 (see, for example, US5 308 407 A).

In oil and gas upstream and downstream industry, weld overlays are deposited on the walls of vessels and vessel components in order to protect the walls from corrosion, high temperature and/or chemical embrittlement. Overlay welding methods normally use strip electrodes, in particular strip electrodes made of a nickel-chromium alloy, in order to produce a weld overlay on the metal surface. The two most common methods for surfacing large components are submerged arc strip cladding and electroslag strip cladding.

In electroslag strip cladding, a strip electrode is continuously fed into a shallow layer of electrically conductive flux. The heat required to melt the strip, the slag-forming flux and the surface layer of the base metal is generated by resistance heating generated by the welding current flowing through the molten conductive slag. The process produces sufficient heat to keep the process stable and to melt the strip into the liquid slag, so as to transfer the strip into molten metal deposited onto the base metal.

Electroslag strip cladding is characterized by a high deposition rate and a low dilution. The degree of dilution among others determines the amount of iron that dilutes from the base metal into the deposited cladding. According to the SFA-5.11:ENiCrMo-3 standard, an iron content of below 7 wt% is demanded on the top surface of the cladding. Despite this standard, designers, fabricators and end-users are demanding less than 5 wt% Fe on the top surface of the cladding.

The metallurgical composition of the welding strip electrode strongly determines the quality of the resulting cladding with regard to corrosion-, temperature- and chemical resistance. A common alloy used for welding strip electrodes is the so-called 625 alloy. The composition of the 625 alloy is defined in AWS SFA 5.14:ERNiCrMo-3 and is as follows:

| | |
|---|---|
| C | ≤ 0,10 wt% |
| Mn | ≤ 0,50 wt% |
| Si | ≤ 0,50 wt% |
| S | ≤ 0,015 wt% |
| P | ≤ 0,02 wt% |
| Cr | 20,0 - 23,0 wt% |
| Mo | 8,0 - 10,0 wt% |
| Nb | 3,15 - 4,15 wt% |
| Fe | ≤ 5,0 wt% |
| Cu | ≤ 0,50 wt% |
| Ti | ≤ 0,40 wt% |

625 alloys are marketed in different variants and various trade marks, such as INCONEL® nickel-chromium alloy 625 (UNS N06625/W.Nr.2.4856).

When using a welding strip electrode made of an 625 alloy, the current electroslag strip cladding processes do not allow to realize a single cladding layer having an iron content of below 5 wt% on its top surface. Instead, a double layer technique has to be applied, in which a first cladding layer is deposited on the metal surface and subsequently a second cladding layer is deposited onto the first layer in a separate electroslag strip cladding process. Because the second layer is applied onto the top surface of the first layer, the second layer has a lower Fe content than the first layer. However, the double layer technique has a number of drawbacks, such as increased manufacturing time and the need of a larger quantity of consumables (welding strip electrode and flux material).

US 5308407 A discloses a flux for electroslag strip cladding, which can have a CaF2 content of > 55 wt%.

WO 96/05935 A2 discloses a method for welding, wherein a welding strip electrode made of Inconel 625 is used.

EP 2656963 discloses a flux material having a CaF2 content of > 55 wt%.

Therefore, it is an object of the instant invention to provide an improved method for depositing an overlay onto a metal surface with an iron content of below 5%. In particular, it is an object of the invention to reduce manufacturing time for the overlay deposit.

It is a further object of the invention to provide an improved method for depositing an overlay onto a metal surface with an iron content of below 5% that reduces the quantity of consumables, such as welding strip electrode and flux.

Further, the method shall be efficient and produce a high quality overlay.

In order to solve at least some of the above objects, the invention generally provides a single-step method for depositing an overlay material onto a metal surface by means of electroslag strip cladding, wherein the overlay material deposit has a Fe content of < 5 wt%, preferably <4 wt%, on its top surface. A single-step method may be realized by depositing only one layer of overlay material onto the metal surface.

In one embodiment of the invention the iron content of the single layer of overlay material is kept below 5 wt% by utilizing a electroslag strip cladding process that comprises using a welding strip electrode made of a 625 alloy and a flux material having a CaF₂ content of > 55 wt%, preferably > 60 wt%, wherein the flux material comprises 2-3 wt% Nb, 5-6,5 wt% Mo and/or 8-12 wt% Cr. The use of a flux material having a relatively high content of CaF₂ results in an increase of the electro-conductivity of the molten pool of flux and strip material and in a reduced dilution of iron from the metal surface into the overlay deposit. A further reduction of the dilution is achieved by selecting a flux material that comprises 2-3 wt% Nb, 5-6,5 wt% Mo and/or 8-12 wt% Cr.

In a preferred embodiment of the invention, the flux material comprises 60-70 wt% CaF₂, 8-12 wt% CaO.Al₂O₃ and 8-12 wt% Cr.

In a particularly preferred embodiment of the invention, the flux material has the following composition:

| | |
|---|---|
| CaF₂ | 60-70 wt%, preferably 65,5 wt% |
| CaO.AL₂O₄ | 8-12 wt%, preferably 9,5 wt% |
| Al₂O₃ | 2-3 wt%, preferably 2,4 wt% |
| Cr | 8-12 wt%, preferably 9,3 wt% |
| Mo | 5-6,5 wt%, preferably 5,7 wt% |
| Nb | 2-3 wt%, preferably 2,4 wt% |
| Na₂O.SiO₂ | 4-6 wt%, preferably 5,3 wt% |

Thus, the flux material does not only comprise several alloying elements, such as Nb, Mo and Cr in order to reduce the dilution, but also other mineral elements in order to facilitate the slag removal. Further, the flux is free of gas promoters in order to avoid gas formation and assure an effective contact between the welding strip electrode and the molten slag. Further, the iron contained in the weld metal is oxidized as much as possible in order to be transferred from the weld pool to the slag.

In a further preferred embodiment, the welding strip electrode has a Fe content of < 1 wt%, preferably < 0,5 wt%. By using a strip that contains such a low Fe content the contribution of the strip to the deposit's Fe content is minimized.

In particular, the welding strip electrode has the following composition:

| | |
|---|---|
| C | 0,005 wt% |
| Mn | 0,030 wt% |
| Si | 0,040 wt% |
| S | 0,001 wt% |
| P | 0,003 wt% |
| Cr | 22,2 wt% |
| Mo | 8,7 wt% |
| Nb | 3,7 wt% |
| Fe | 0,1 wt% |
| Cu | 0,01 wt% |
| Ti | 0,24 wt% |

Such a welding strip electrode is marketed by voestalpine Böhler Welding Belgium s.a. under the trademark SOUDOTAPE 625.

Preferably, the electroslag strip cladding comprises:
- providing a welding strip electrode made of a 625 alloy,
- providing the flux material,
- positioning the welding strip electrode at a distance above a welding area of the metal surface,
- applying a layer of flux material onto the metal surface in the welding area,
- applying a welding current to the welding strip electrode thereby melting the flux material, the strip electrode and the metal surface,
- continuously feeding the welding strip electrode into the layer of molten flux material while advancing the welding strip electrode over the metal surface to produce an overlay material deposit on the metal surface along the advancement path.

It is known that the welding parameters chosen for the electroslag strip cladding process, such as welding current, welding voltage, welding speed and stick-out have an influence on the penetration thickness (the thickness of the material layer of the base metal that is molten) and the deposit thickness. In a preferred embodiment of the invention, an optimization of the welding parameters is achieved in order to keep the right ratio between penetration and deposit thickness and also to give enough time to transfer the elements between the weld pool and the liquid slag. Accordingly, said electroslag strip cladding may comprise applying a welding current of 200-1800 A, preferably 1150-1250 A, and a welding voltage of 22-26 V, in particular 23-25 V.

The welding current may preferably selected so as to be adapted to the width of the welding strip electrode. According to a preferred embodiment a welding strip electrode is used having a width of 10-90mm, preferably 60mm. In order to adjust the welding current to the strip width it is advantageously proceeded such that the ratio of welding current [A] to strip width [mm] of the electrode is selected to be 18-22, preferably 20.

Further, said electroslag strip cladding advantageously may comprise positioning the welding strip electrode at a distance above a welding area of the metal surface so that the stick out is 28-42 mm, preferably 29-40 mm.

Further, the welding speed is preferably selected to be 16-18 cm/min.

It is known that the strip feeding nozzle plays an important role in the strip cladding process. The nozzle guides the welding strip electrode, ensures an even distribution of the welding current over the full width of the welding strip electrode and has to be able to withstand and to dissipate the heat sufficiently to avoid overheating during continuous operation.

According to a preferred embodiment of the invention, the strip feeding nozzle is mounted to be pivotable relative to the metal surface. Depending on the base material curvature it is advantageous to give an inclination to the welding strip electrode by using a pivoting nozzle. This allows to control the angle between the strip and the surface to be clad. Accordingly, a preferred embodiment provides that said electroslag strip cladding comprises holding a strip feeding nozzle such that the welding strip electrode is arranged at a maximum inclination angle of ± 25° with respect to the perpendicular to the metal surface.

In the following, the invention will be explained in more detail by way of an exemplary embodiment.

A flat carbon steel plate (0,2 wt% C; thickness: 30 mm) was used as the base metal. The metal surface of this steel plate was covered with an overlay material by means of a welding process. An electroslag strip cladding process was used as said welding process. In the electroslag strip cladding process the consumables (welding strip electrode and flux material) are molten through resistance heating. The heating is provided by an electric current transmitted to the molten pool through an electrically conductive flux which, after melting, participates to the strip melting and generates a slag. In this process, the flux is introduced through a flux tube placed in front of the cladding nozzle and the strip is fed through a feeding roller.

A welding strip electrode as marketed by voestalpine Böhler Welding Belgium s.a. under the trademark SOUDOTAPE 625 was used, which has the following composition:

| | |
|---|---|
| C | 0,005 wt% |
| Mn | 0,030 wt% |
| Si | 0,040 wt% |
| S | 0,001 wt% |
| P | 0,003 wt% |
| Cr | 22,2 wt% |
| Mo | 8,7 wt% |
| Nb | 3,7 wt% |
| Fe | 0,1 wt% |
| Cu | 0,01 wt% |
| Ti | 0,24 wt% |

The strip electrode had a width of 60mm and a thickness of 0,5mm.

Further, a powdery flux material was used, that had the following composition:

| | |
|---|---|
| CaF₂ | 65,5 wt% |
| CaO.AL₂O₄ | 9,5 wt% |
| Al₂O₃ | 2,4 wt% |
| Cr | 9,3 wt% |
| Mo | 5,7 wt% |
| Nb | 2,4 wt% |
| Na₂O.SiO₂ | 5,3 wt% |

The following welding parameters were used:

| | |
|---|---|
| Welding current: | 1200 A |
| Welding voltage: | 24V |
| Welding speed: | 17 cm/min |
| Stick-out: | 30 mm |

Two beads (each being a single layer deposit) of overlay material arranged side-by side were deposited onto the surface of the steel plate.

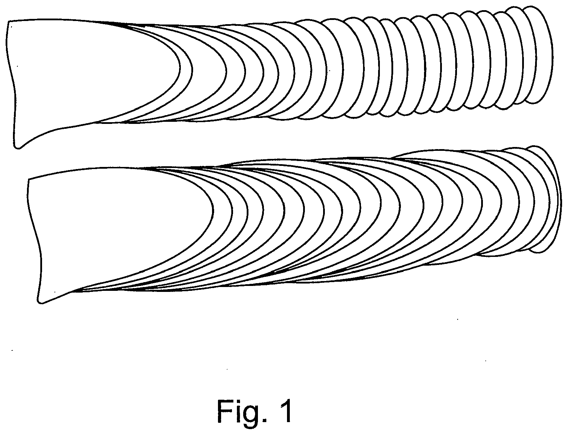

The resulting strip cladding (Fig. 1) was subjected to a number of analyzing processes, such as side-bend tests, ultrasonic observations, hardness measurements, overlay chemistry measurements on the top surface and at 3 mm below the top surface, corrosion tests (ASTM G28A and corrosion pitting test) and micro- and macrographical observations, in order to check the quality of the deposit.

The results of the test were positive; the surface was continuous and without any defect. The chemical analysis of the deposit obtained showed the following results:

| **Element** | **wt% Surface of the deposit** | **wt% AWS SFA 5.11 : ENiCrMo-3** |
|---|---|---|
| **C** | 0,01 | ≤ 0,10 |
| **Mn** | 0,04 | ≤ 1,0 |
| **Si** | 0,3 | ≤ 0,75 |
| **S** | ≤ 0,005 | ≤ 0,02 |
| **P** | ≤ 0,005 | ≤ 0,03 |
| **Cr** | 22,8 | 20,0 - 23,0 |
| **Mo** | 9,83 | 8,0 - 10,0 |
| **Nb** | 3,7 | 3,15 - 4,15 |
| **Fe** | 3,94 | ≤ 7,0 |
| **Cu** | ≤ 0,01 | ≤ 0,50 |
| **Ti** | ≤ 0,01 | --- |

Thus, the content of all chemical elements was below the limits laid down in AWS SFA 5.11:ENiCrMo-3. Most importantly, the Fe content could be reduced to below 4 wt% when compared to the prior art.

## Claims

1. A method for depositing an overlay material onto a metal surface by means of electroslag strip cladding, wherein said electroslag strip cladding comprises using a welding strip electrode made of a 625 alloy and a flux material having a CaF₂ content of > 55 wt%, preferably > 60 wt%, **characterized in that** the flux material comprises 2-3 wt% Nb, 5-6,5 wt% Mo and/or 8-12 wt% Cr.

2. Method according to claim 1, wherein only one layer of overlay material is deposited onto the metal surface.

3. Method according to claim 1 or 2, wherein the overlay material deposit has a Fe content of < 5 wt%, preferably <4 wt%, on its top surface.

4. Method according to any one of claims 1-3, wherein the flux material comprises 60-70 wt% CaF₂, 8-12 wt% CaO.Al₂O₃ and 8-12 wt% Cr.

5. Method according to any one of claims 1-4, wherein the flux material has the following composition:
| | |
|---|---|
| CaF₂ | 60-70 wt%, preferably 65,5 wt% |
| CaO.AL₂O₄ | 8-12 wt%, preferably 9,5 wt% |
| Al₂O₃ | 2,3 wt%, preferably 2,4 wt% |
| Cr | 8-12 wt%, preferably 9,3 wt% |
| Mo | 5-6,5 wt%, preferably 5,7 wt% |
| Nb | 2-3 wt%, preferably 2,4 wt% |
| Na₂O.SiO₂ | 4-6 wt%, preferably 5,3 wt% |

6. Method according to any one of claims 1-5, wherein the welding strip electrode has a Fe content of < 1 wt%.

7. Method according to any one of claims 1-6, wherein the welding strip electrode has the following composition:
| | |
|---|---|
| C | 0,005 wt% |
| Mn | 0,030 wt% |
| Si | 0,040 wt% |
| S | 0,001 wt% |
| P | 0,003 wt% |
| Cr | 22,2 wt% |
| Mo | 8,7 wt% |
| Nb | 3,7 wt% |
| Fe | 0,1 wt% |
| Cu | 0,01 wt% |
| Ti | 0,24 wt% |

8. Method according to any one of claims 1-7, wherein electroslag strip cladding comprises:
- providing a welding strip electrode made of a 625 alloy,
- providing a flux material with a CaF₂ content of > 55 wt%,
- positioning the welding strip electrode at a distance above a welding area of the metal surface,
- applying a layer of flux material onto the metal surface in the welding area,
- applying a welding current to the welding strip electrode thereby melting the flux material, the strip electrode and the metal surface,
- continuously feeding the welding strip electrode into the layer of molten flux material while advancing the welding strip electrode over the metal surface to produce an overlay material deposit on the metal surface along the advancement path.

9. Method according to any one of claims 1-8, wherein a welding strip electrode is used having a width of 10-90mm, preferably 60mm.

10. Method according to any one of claims 1-9, wherein said electroslag strip cladding comprises applying a welding current of 200-1800 A, preferably 1150-1250 A, and a welding voltage of 22-26 V, in particular 23-25 V.

11. Method according to claim 9 or 10, wherein the ratio of welding current [A] to strip width [mm] of the electrode is selected to be 18-22, preferably 20.

12. Method according to any one of claims 1-11, wherein said electroslag strip cladding comprises positioning the welding strip electrode at a distance above a welding area of the metal surface so that the stick-out is 28-42 mm, preferably 29-40 mm.

13. Method according to any one of claims 1-12, wherein said electroslag strip cladding comprises holding a strip feeding nozzle such that the welding strip electrode is arranged at a maximum inclination angle of ± 25° with respect to the perpendicular to the metal surface.

14. Flux material for use in a method for depositing an overlay material onto a metal surface by means of electroslag strip cladding, said flux material having a CaF₂ content of > 55 wt%, **characterized in that** the flux material comprises 2-3 wt% Nb, 5-6,5 wt% Mo and/or 8-12 wt% Cr.

15. Flux material according to claim 14, wherein the flux material comprises 60-70 wt% CaF₂, 8-12 wt% CaO.Al₂O₃ and 8-12 wt% Cr.

16. Flux material according to claim 14 or 15, wherein the flux material has the following composition:
| | |
|---|---|
| CaF₂ | 60-70 wt%, preferably 65,5 wt% |
| CaO.AL₂O₄ | 8-12 wt%, preferably 9,5 wt% |
| Al₂O₃ | 2-3 wt%, preferably 2,4 wt% |
| Cr | 8-12 wt%, preferably 9,3 wt% |
| Mo | 5-6,5 wt%, preferably 5,7 wt% |
| Nb | 2-3 wt%, preferably 2,4 wt% |
| Na₂O.SiO₂ | 4-6 wt%, preferably 5,3 wt% |

17. Set for use in a method for depositing an overlay material onto a metal surface by means of electroslag strip cladding, comprising a flux material according to any one of claims 14-16 and a welding strip electrode, wherein the welding strip electrode is made of a 625 alloy and the flux material has a CaF₂ content of > 55 wt%.

18. Set according to claim 17, wherein the welding strip electrode has a Fe content of < 1 wt%.

19. Set according to claim 17 or 18, wherein the welding strip electrode has the following composition:
| | |
|---|---|
| C | 0,005 wt% |
| Mn | 0,030 wt% |
| Si | 0,040 wt% |
| S | 0,001 wt% |
| P | 0,003 wt% |
| Cr | 22,2 wt% |
| Mo | 8,7 wt% |
| Nb | 3,7 wt% |
| Fe | 0,1 wt% |
| Cu | 0,01 wt% |
| Ti | 0,24 wt% |

20. An article, such as a plate, a vessel or a pipe, comprising a metal surface and at least one overlay material bead deposited onto the metal surface by means of a welding process, **characterized in that** the overlay material bead is deposited in a single layer and has an iron content on its top surface of < 5 wt%, preferably < 4 wt%.

21. Article according to claim 20, wherein the cladded material has the following typical composition on its top surface:
| | |
|---|---|
| C | 0,01 wt% |
| Mn | 0,04 wt% |
| Si | 0,3 wt% |
| S | ≤ 0,005 wt% |
| P | ≤ 0,005 wt% |
| Cr | 22,8 wt% |
| Mo | 9,83 wt% |
| Nb | 3,7 wt% |
| Fe | 3,94 wt% |
| Cu | ≤ 0,01 wt% |
| Ti | ≤ 0,01 wt% |

## Patentansprüche

1. Verfahren zum Aufbringen eines Überlagerungsmaterials auf eine Metalloberfläche durch Elektroschlacke-Bandplattierung, wobei bei der Elektroschlacke-Bandplattierung eine Schweißbandelektrode aus einer 625-Legierung und ein Flussmittel mit einem CaF₂-A-nteil von > 55 Gew.-%, vorzugsweise > 60 Gew.-%, verwendet werden, **dadurch gekennzeichnet, dass** das Flussmittel 2 - 3 Gew.-% Nb, 5 - 6,5 Gew.-% Mo und/oder 8 - 12 Gew.-% Cr umfasst.

2. Verfahren nach Anspruch 1, wobei nur eine Schicht des Überlagerungsmaterials auf die Metalloberfläche aufgebracht wird.

3. Verfahren nach Anspruch 1 oder 2, wobei das aufgebrachte Überlagerungsmaterial einen Fe-Anteil von < 5 Gew.-%, vorzugsweise < 4 Gew.-% auf seiner Oberfläche aufweist.

4. Verfahren nach einem der Ansprüche 1 bis 3, wobei das Flussmittel 60 - 70 Gew.-% CaF₂, 8 - 12 Gew.-% CaO.Al₂O₃ und 8 - 12 Gew.-% Cr umfasst.

5. Verfahren nach einem der Ansprüche 1 bis 4, wobei das Flussmittel die folgende Zusammensetzung aufweist:
| | |
|---|---|
| CaF₂ | 60 - 70 Gew.-%, vorzugsweise 65,5 Gew.-% |
| CaO.Al₂O₄ | 8 - 12 Gew.-%, vorzugsweise 9,5 Gew.-% |
| Al₂O₃ | 2 - 3 Gew.-%, vorzugsweise 2,4 Gew.-% |
| Cr | 8 - 12 Gew.-%, vorzugsweise 9,3 Gew.-% |
| Mo | 5 - 6,5 Gew.-%, vorzugsweise 5,7 Gew.-% |
| Nb | 2 - 3 Gew.-%, vorzugsweise 2,4 Gew.-% |
| Na₂O.SiO₂ | 4 - 6 Gew.-%, vorzugsweise 5,3 Gew.-% |

6. Verfahren nach einem der Ansprüche 1 bis 5, wobei die Schweißbandelektrode einen Fe-Anteil von < 1 Gew.-% aufweist.

7. Verfahren nach einem der Ansprüche 1 bis 6, wobei die Schweißbandelektrode die folgende Zusammensetzung aufweist:
| | |
|---|---|
| C | 0,005 Gew.-% |
| Mn | 0,030 Gew.-% |
| Si | 0,040 Gew.-% |
| S | 0,001 Gew.-% |
| P | 0,003 Gew.-% |
| Cr | 22,2 Gew.-% |
| Mo | 8,7 Gew.-% |
| Nb | 3,7 Gew.-% |
| Fe | 0,1 Gew.-% |
| Cu | 0,01 Gew.-% |
| Ti | 0,24 Gew.-% |

8. Verfahren nach einem der Ansprüche 1 bis 7, wobei die Elektroschlacke-Bandplattierung Folgendes umfasst:
- Bereitstellen einer Schweißbandelektrode aus einer 625-Legierung,
- Bereitstellen eines Flussmittels mit einem CaF₂-Anteil von > 55 Gew.-%,
- Positionieren der Schweißbandelektrode in einem Abstand über einem Schweißbereich der Metalloberfläche,
- Aufbringen einer Schicht aus Flussmittel auf die Metalloberfläche im Schweißbereich,
- Anwenden eines Schweißstroms auf die Schweißbandelektrode, wodurch das Flussmittel, die Bandelektrode und die Metalloberfläche geschmolzen werden,
- kontinuierliches Vorschieben der Schweißbandelektrode in die Schicht aus geschmolzenem Flussmittel, während die Schweißbandelektrode über der Metalloberfläche vorbewegt wird, um eine Überlagerungsmaterialabscheidung entlang dem Vorbewegungsweg auf der Metalloberfläche zu erzeugen.

9. Verfahren nach einem der Ansprüche 1 bis 8, wobei eine Schweißbandelektrode mit einer Breite von 10 bis 90 mm, vorzugsweise 60 mm, verwendet wird.

10. Verfahren nach einem der Ansprüche 1 bis 9, wobei die Elektroschlacke-Bandplattierung das Anwenden eines Schweißstroms von 200 bis 1800 A, vorzugsweise 1150 bis 1250 A, und einer Schweißspannung von 22 bis 26 V, insbesondere 23 bis 25 V, umfasst.

11. Verfahren nach Anspruch 9 oder 10, wobei das Verhältnis zwischen dem Schweißstrom [A] und der Bandbreite [mm] der Elektrode als 18 bis 22, vorzugsweise 20, ausgewählt wird.

12. Verfahren nach einem der Ansprüche 1 bis 11, wobei die Elektroschlacke-Bandplattierung das Positionieren der Schweißbandelektrode in einem Abstand über einem Schweißbereich der Metalloberfläche umfasst, so dass sie 28 bis 42 mm, vorzugsweise 29 bis 40 mm heraussteht.

13. Verfahren nach einem der Ansprüche 1 bis 12, wobei die Elektroschlacke-Bandplattierung das Halten einer Bandzufuhrdüse umfasst, so dass die Schweißbandelektrode bei einem maximalen Neigungswinkel von ± 25° in Bezug auf die Senkrechte zur Metalloberfläche angeordnet wird.

14. Flussmittel zur Verwendung bei einem Verfahren zum Aufbringen eines Überlagerungsmaterials auf eine Metalloberfläche durch eine Elektroschlacke-Bandplattierung, wobei das Flussmittel einen CaF₂-Anteil von > 55 Gew.-% aufweist, **dadurch gekennzeichnet, dass** das Flussmittel 2 - 3 Gew.-% Nb, 5 - 6,5 Gew.-% Mo und/oder 8 - 12 Gew.-% Cr umfasst..

15. Flussmittel nach Anspruch 14, wobei das Flussmittel 60 - 70 Gew.-% CaF₂, 8 - 12 Gew.-% CaO.Al₂O₃ und 8 - 12 Gew.-% Cr umfasst.

16. Flussmittel nach Anspruch 14 oder 15, wobei das Flussmittel die folgende Zusammensetzung aufweist:
| | |
|---|---|
| CaF₂ | 60 - 70 Gew.-%, vorzugsweise 65,5 Gew.-% |
| CaO.Al₂O₄ | 8 - 12 Gew.-%, vorzugsweise 9,5 Gew.-% |
| Al₂O₃ | 2 - 3 Gew.-%, vorzugsweise 2,4 Gew.-% |
| Cr | 8 - 12 Gew.-%, vorzugsweise 9,3 Gew.-% |
| Mo | 5 - 6,5 Gew.-%, vorzugsweise 5,7 Gew.-% |
| Nb | 2 - 3 Gew.-%, vorzugsweise 2,4 Gew.-% |
| Na₂O.SiO₂ | 4 - 6 Gew.-%, vorzugsweise 5,3 Gew.-% |

17. Set zur Verwendung bei einem Verfahren zum Aufbringen eines Überlagerungsmaterials auf eine Metalloberfläche durch Elektroschlacke-Bandplattierung umfassend ein Flussmittel nach einem der Ansprüche 14 bis 16 und eine Schweißbandelektrode, wobei die Schweißbandelektrode aus einer 625-Legierung besteht und das Flussmittel einen CaF₂-Anteil von > 55 Gew.-% aufweist.

18. Set nach Anspruch 17, wobei die Schweißbandelektrode einen Fe-Anteil von < 1 Gew.-% aufweist.

19. Set nach Anspruch 17 oder 18, wobei die Schweißbandelektrode die folgende Zusammensetzung aufweist:
| | |
|---|---|
| C | 0,005 Gew.-% |
| Mn | 0,030 Gew.-% |
| Si | 0,040 Gew.-% |
| S | 0,001 Gew.-% |
| P | 0,003 Gew.-% |
| Cr | 22,2 Gew.-% |
| Mo | 8,7 Gew.-% |
| Nb | 3,7 Gew.-% |
| Fe | 0,1 Gew.-% |
| Cu | 0,01 Gew.-% |
| Ti | 0,24 Gew.-% |

20. Artikel in der Art einer Platte, eines Gefäßes oder eines Rohrs mit einer Metalloberfläche und wenigstens einem durch einen Schweißprozess auf die Metalloberfläche aufgebrachten Überlagerungsmaterialwulst, **dadurch gekennzeichnet, dass** der Überlagerungsmaterialwulst in einer einzigen Schicht aufgebracht wird und auf seiner oberen Fläche einen Eisenanteil von > 5 Gew.-%, vorzugsweise < 4 Gew.-% aufweist.

21. Artikel nach Anspruch 20, wobei das Überlagerungsmaterial die folgende typische Zusammensetzung auf seiner oberen Fläche aufweist:
| | |
|---|---|
| C | 0,01 Gew.-% |
| Mn | 0,04 Gew.-% |
| Si | 0,3 Gew.-% |
| S | ≤ 0,005 Gew.-% |
| P | ≤ 0,005 Gew.-% |
| Cr | 22,8 Gew.-% |
| Mo | 9,83 Gew.-% |
| Nb | 3,7 Gew.-% |
| Fe | 3,94 Gew.-% |
| Cu | ≤ 0,01 Gew.-% |
| Ti | ≤ 0,01 Gew.-% |

## Revendications

1. Procédé de dépôt d'un matériau de recouvrement sur une surface métallique au moyen d'un placage en feuillard sous laitier électroconducteur, dans lequel ledit placage en feuillard sous laitier électroconducteur comprend l'utilisation d'une électrode en feuillard de soudage constituée d'un alliage 625 et d'un matériau de fondant ayant une teneur en CaF₂ > 55 % en poids, de préférence > 60 % en poids, **caractérisé en ce que** le matériau de fondant comprend 2 à 3 % en poids de Nb, 5 à 6,5 % en poids de Mo et/ou 8 à 12 % en poids de Cr.

2. Procédé selon la revendication 1, dans lequel une seule couche de matériau de recouvrement est déposée sur la surface métallique.

3. Procédé selon la revendication 1 ou 2, dans lequel le dépôt de matériau de recouvrement a une teneur en Fe < 5 % en poids, de préférence < 4 % en poids, sur sa surface supérieure.

4. Procédé selon l'une quelconque des revendications 1 à 3, dans lequel le matériau de fondant comprend 60 à 70 % en poids de CaF₂, 8 à 12 % en poids de CaO.Al₂O₃ et 8 à 12 % en poids de Cr.

5. Procédé selon l'une quelconque des revendications 1 à 4, dans lequel le matériau de fondant a la composition suivante :
| | |
|---|---|
| CaF₂ | 60-70 % en poids, de préférence 65,5 % en |
| poids | |
| CaO.Al₂O₄ | 8-12 % en poids, de préférence 9,5 % en poids |
| Al₂O₃ | 2-3 % en poids, de préférence 2,4 % en poids |
| Cr | 8-12 % en poids, de préférene 9,3 % en poids |
| Mo | 5-6,5 % en poids, de préférence 5,7 % en |
| poids | |
| Nb | 2-3 % en poids, de préférence 2,4 % en poids |
| Na₂O.SiO₂ | 4-6 % en poids, de préférence 5,3 % en poids. |

6. Procédé selon l'une quelconque des revendications 1 à 5, dans lequel l'électrode en feuillard de soudage a une teneur en Fe < 1 % en poids.

7. Procédé selon l'une quelconque des revendications 1 à 6, dans lequel l'électrode en feuillard de soudage a la composition suivante :
| | |
|---|---|
| C | 0,005 % en poids |
| Mn | 0,030 % en poids |
| Si | 0,040 % en poids |
| S | 0,001 % en poids |
| P | 0,003 % en poids |
| Cr | 22,2 % en poids |
| Mo | 8,7 % en poids |
| Nb | 3,7 % en poids |
| Fe | 0,1 % en poids |
| Cu | 0,01 % en poids |
| Ti | 0,24 % en poids. |

8. Procédé selon l'une quelconque des revendications 1 à 7, dans lequel le placage en feuillard sous laitier électroconducteur comprend :
- la fourniture d'une électrode en feuillard de soudage constituée d'un alliage 625,
- la fourniture d'un matériau de fondant avec une teneur en CaF₂ > 55 % en poids,
- le positionnement de l'électrode en feuillard de soudage à une certaine distance au-dessus d'une zone de soudage de la surface métallique,
- l'application d'une couche de matériau de fondant sur la surface métallique dans la zone de soudage,
- l'application d'un courant de soudage à l'électrode en feuillard de soudage, en fondant de la sorte le matériau de fondant, l'électrode en feuillard et la surface métallique,
- l'acheminement en continu de l'électrode en feuillard de soudage dans la couche de matériau de fondant fondu tout en faisant avancer l'électrode en feuillard de soudage par-dessus la surface métallique pour produire un dépôt de matériau de recouvement sur la surface métallique le long du trajet d'avancement.

9. Procédé selon l'une quelconque des revendications 1 à 8, dans lequel on utilise une électrode en feuillard de soudage ayant une largeur de 10 à 90 mm, de préférence de 60 mm.

10. Procédé selon l'une quelconque des revendications 1 à 9, dans lequel ledit placage en feuillard sous laitier électroconducteur comprend l'application d'un courant de soudage de 200 à 1800 A, de préférence de 1150 à 1250 A, et une tension de soudage de 22 à 26 V, en particulier de 23 à 25 V.

11. Procédé selon la revendication 9 ou 10, dans lequel le rapport du courant de soudage [A] à la largeur de feuillard [mm] de l'électrode est choisi pour être de 18 à 22, de préférence de 20.

12. Procédé selon l'une quelconque des revendications 1 à 11, dans lequel ledit placage en feuillard sous laitier électroconducteur comprend le positionnement de l'électrode en feuillard de soudage à une certaine distance au-dessus d'une zone de soudage de la surface métallique de sorte que le décollement soit de 28 à 42 mm, de préférence de 29 à 40 mm.

13. Procédé selon l'une quelconque des revendications 1 à 12, dans lequel ledit placage en feuillard sous laitier électroconducteur comprend le maintien d'une buse d'alimentation en feuillard de sorte que l'électrode en feuillard de soudage soit agencée sous un angle d'inclinaison maximal de ± 25° par rapport à la perpendiculaire à la surface métallique.

14. Matériau de fondant pour utilisation dans un procédé de dépôt d'un matériau de recouvrement sur une surface métallique au moyen d'un placage en feuillard sous laitier électroconducteur, ledit matériau de fondant ayant une teneur en CaF₂ > 55 % en poids, **caractérisé en ce que** le matériau de fondant comprend 2 à 3 % en poids de Nb, 5 à 6,5 % en poids de Mo et/ou 8 à 12 % en poids de Cr.

15. Matériau de fondant selon la revendication 14, dans lequel le matériau de fondant comprend 60 à 70 % en poids de CaF₂, 8 à 12 % de CaO.Al₂O₃ et 8 à 12 % en poids de Cr.

16. Matériau de fondant selon la revendication 14 ou 15, dans lequel le matériau de fondant a la composition suivante :
| | |
|---|---|
| CaF₂ | 60-70 % en poids, de préférence 65,5 % en poids |
| CaO.Al₂O₄ | 8-12 % en poids, de préférence 9,5 % en poids |
| Al₂O₃ | 2-3 % en poids, de préférence 2,4 % en poids |
| Cr | 8-12 % en poids, de préférene 9,3 % en poids |
| Mo | 5-6,5 % en poids, de préférence 5,7 % en poids |
| Nb | 2-3 % en poids, de préférence 2,4 % en poids |
| Na₂O.SiO₂ | 4-6 % en poids, de préférence 5,3 % en poids. |

17. Ensemble pour utilisation dans un procédé de dépôt d'un matériau de recouvrement sur une surface métallique au moyen d'un placage en feuillard sous laitier électroconducteur, comprenant un matériau de fondant selon l'une quelconque des revendications 14 à 16 et une électrode en feuillard de soudage, dans lequel l'électrode en feuillard de soudage est constituée d'un alliage 625 et le matériau de fondant a une teneur en CaF₂ > 55 % en poids.

18. Ensemble selon la revendication 17, dans lequel l'électrode en feuillard de soudage a une teneur en Fe < 1 % en poids.

19. Ensemble selon la revendication 17 ou 18, dans lequel l'électrode en feuillard de soudage a la composition suivante :
| | |
|---|---|
| C | 0,005 % en poids |
| Mn | 0,030 % en poids |
| Si | 0,040 % en poids |
| S | 0,001 % en poids |
| P | 0,003 % en poids |
| Cr | 22,2 % en poids |
| Mo | 8,7 % en poids |
| Nb | 3,7 % en poids |
| Fe | 0,1 % en poids |
| Cu | 0,01 % en poids |
| Ti | 0,24 % en poids. |

20. Article tel qu'une plaque, une cuve ou un tuyau, comprenant une surface métallique et au moins un bourrelet de matériau de recouvrement déposé sur la surface métallique au moyen d'un procédé de soudage, **caractérisé en ce que** le bourrelet de matériau de recouvrement est déposé en une seule couche et a une teneur en fer sur sa surface supérieure < 5 % en poids, de préférence 4 % en poids.

21. Article selon la revendication 20, dans lequel le matériau plaqué a la composition typique suivante sur sa surface supérieure :
| | |
|---|---|
| C | 0,01 % en poids |
| Mn | 0,04 % en poids |
| Si | 0,3 % en poids |
| S | ≤ 0,005 % en poids |
| P | ≤ 0,005 % en poids |
| Cr | 22,8 % en poids |
| Mo | 9,83 % en poids |
| Nb | 3,7 % en poids |
| Fe | 3,94 % en poids |
| Cu | ≤ 0,01 % en poids |
| Ti | ≤ 0,01 % en poids. |
